Europäisches Patentamt

(19) European Patent Office

Office européen des brevets

(11) Numéro de publication: **0 166 988**

**B1**

(12) **FASCICULE DE BREVET EUROPÉEN**

(45) Date de publication du fascicule du brevet:
15.02.89

(21) Numéro de dépôt: **85106868.4**

(22) Date de dépôt: **04.06.85**

(51) Int. Cl.⁴: **F 16 L 3/16,** F 16 L 3/18,
F 16 L 59/12

(54) **Dispositif d'attache d'une tuyauterie de faible épaisseur.**

(30) Priorité: **05.06.84 FR 8408788**

(43) Date de publication de la demande:
**08.01.86 Bulletin 86/2**

(45) Mention de la délivrance du brevet:
**15.02.89 Bulletin 89/7**

(84) Etats contractants désignés:
**BE DE FR GB IT NL**

(56) Documents cité:
**DE-A-2 516 092**
**DE-A-3 239 555**
**DE-C-482 629**
**FR-A-2 339 800**
**US-A-1 735 192**
**US-A-3 806 218**

(73) Titulaire: **STEIN INDUSTRIE Société Anonyme
dite:, 19- 21, avenue Morane Saulnier, F-78140
Velizy Villacoublay (FR)**

(72) Inventeur: **Marsault, Jean- Jacques, 23, rue des
Corps Saints, F-78730 Saint Arnoult en Yvelines
(FR)**
Inventeur: **Peyrelongue, Jean- Pierre, 2, square
Francis Jammes, F-78760 Pontchartrain (FR)**
Inventeur: **Semedard, Jean- Claude, 184, avenue de
Choisy, F-75013 Paris (FR)**
Inventeur: **Vallee, Gérard, 47, avenue du Général
Leclerc, F-78220 Viroflay (FR)**

(74) Mandataire: **Weinmiller, Jürgen, Lennéstrasse 9
Postfach 24, D-8133 Feldafing (DE)**

EP 0 166 988 B1

## Description

La présente invention concerne un dispositif de supportage ou de fixation d'une tuyauterie d'épaisseur faible par rapport à son diamètre et soumise à des variations de température importantes et à des efforts radiaux d'orientation quelconque, comprenant

a) un demi-collier rigide disposé autour et espacé du pourtour de la tuyauterie,
b) au moins un bras articulé sur une extrémité du demi-collier,
c) un organe de serrage flexible du bras, refermant élastiquement le bras sur la tuyauterie, indépendamment des dilatations et des efforts radiaux appliqués à la tuyauterie,
et d) des berceaux de support de profil interne à rayon de courbure voisin de celui de la tuyauterie, interposés entre la tuyauterie et le dispositif de serrage formé par le demi-collier rigide, les bras articulés et l'organe de serrage.

La Demanderesse a proposé dans ses brevets FR-A-2 443 011 et 2 499 202 des dispositifs de ce genre, qui conviennent notamment pour le supportage ou la fixation de tuyauteries de transport de sodium liquide dans des centrales à réacteur nucléaire surrégénérateur, et résistantes aux secousses sismiques. Ces dispositifs comportent des organes de reprise d'efforts soudés sur la tuyauterie, formés par des taquets circulaires venant s'engager dans des trous de lames élastiques soudées à l'une au moins de leurs extrémités à des fers radiaux solidaires d'un collier rigide entourant la tuyauterie. Ils nécessitent un nombre de soudures relativement important, de sorte que leur mise en place est longue et onéreuse.

Le document US-A-1 735 192 décrit un support de tuyauterie d'épaisseur faible par rapport à son diamètre, comprenant des berceaux de support de profil interne à rayon de courbure voisin de celui de la tuyauterie, un demi-collier rigide disposé autour et espacé du pourtour de la tuyauterie, et sur lequel est fixé un berceau, un bras articulé sur une extrémité du demi-collier, et sur lequel est fixé un autre berceau, et un organe de serrage flexible du bras appliquant élastiquement le bras, et par suite les berceaux, sur la tuyauterie, indépendamment des dilatations et des efforts radiaux appliqués à la tuyauterie.

Le document FR-A-2 339 800 porte sur un dispositif de supportage d'une tuyauterie comprenant deux bras disposés autour de la tuyauterie, formant pince à anneau fendu, avec un dispositif de compensation des dilatations radiales assurant un serrage flexible.

Le support de tuyauterie selon le document US-A-1 735 192 assure cependant le serrage de la tuyauterie par un système à boulon serré par un écrou, susceptible d'engendrer des contraintes excessives dans la tuyauterie, et ses berceaux sont fixes, l'un au-dessus, l'autre au-dessous de la tuyauterie, de sorte que leur contact avec la tuyauterie n'est centré que pour un degré de serrage bien déterminé, ce qui entraîne un risque d'ovalisation de la tuyauterie. Le serrage de la tuyauterie est assuré dans le document FR-A-2 339 800 par deux jeux de boulons et d'écrous diamétralement opposés, dont l'un est muni de rondelles de ressort destinées à compenser les dilatations radiales. Mais le serrage ne reste pas non plus centré et homogène sur le pourtour de la tuyauterie lors de ses dilatations.

La présente invention a pour but de procurer un dispositif d'attache d'une tuyauterie d'épaisseur faible par rapport à son diamètre, qui maintienne la tuyauterie sans y engendrer de contraintes excessives, quels que soient les dilatations diamétrales et efforts appliqués, et évite les risques d'ovalisation de la tuyauterie.

Le dispositif selon l'invention est caractérisé en ce qu'il comporte deux bras articulés sur les extrémités du demi-collier rigide, et en ce que les berceaux de support sont fixés à pivotement sur le demi-collier rigide et les bras articulés de manière à compenser une tendance à l'ovalisation de la tuyauterie.

Il répond en outre de préférence à au moins l'une des caractéristiques suivantes

- Les berceaux sont revêtus sur leur face de contact avec la tuyauterie d'une couche d'un matériau susceptible d'un écrasement élastique et résistant à la chaleur.
- Le matériau susceptible d'un écrasement élastique est un tricot comprimé d'un fil métallique fin.
- Les berceaux, le demi-collier et la majeure partie des bras articulés sont disposés à l'intérieur d'un calorifuge entourant la tuyauterie, et le dispositif de serrage flexible est disposé à l'extérieur de ce calorifuge.
- Le demi-collier rigide est relié par des étriers à des organes de supportage auto-bloquants en cas de déplacement rapide, mais autorisant les déplacements lents, ou à des organes de supportage statique.

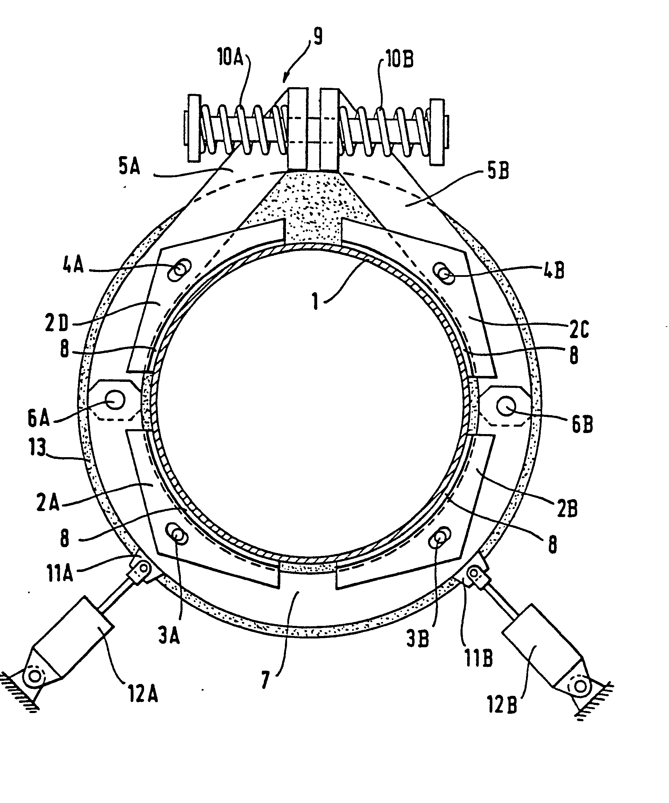

Il est décrit ci-après, à titre d'exemple et en référence à la figure unique du dessin annexé, un dispositif de supportage d'une tuyauterie de transport de métal fondu, tel que du sodium, pour centrale de production d'électricité à réacteur surrégénérateur. On sait que la température de telles tuyauteries peut varier très rapidement, de 100° ou 200° C en quelques minutes.

La figure représente le dispositif en coupe diamétrale (selon une section droite de la tuyauterie).

La tuyauterie 1 de grand diamètre, de l'ordre de 700 à 1000 mm, et de faible épaisseur de paroi, de 10 à 20 mm, est enserrée par quatre berceaux 2A, 2B, 2C, 2D répartis régulièrement sur son pourtour, et de rayon de courbure légèrement supérieur à celui de la tuyauterie à froid, et pouvant être égal au rayon maximal de la tuyauterie à chaud. Les berceaux inférieurs 2A, 2B sont solidaires par l'intermédiaire d'axes de pivotement 3A, 3B d'un demi-collier rigide 7. Les deux autres berceaux sont solidaires par l'intermédiaire de pivots 4A, 4B de deux bras 5A, 5B articulés en 6A, 6B sur le demi-collier rigide 7. Tous les berceaux sont revêtus sur leur face du côté de la tuyauterie d'une couche 8 de matériau susceptible d'écrasement élastique et résistant à la chaleur, tel qu'un tricot comprimé d'un fil fin d'acier inoxydable, qui résiste à 500° C en conservant ses propriétés.

Un organe à ressorts 10A, 10B, tendant à rapprocher les bras articulés, permet d'appliquer les berceaux 2C, 2D sur la tuyauterie avec une force déterminée.

Des étriers 11A, 11B, solidaires du demi-collier rigide 7, permettent l'accrochage sur celui-ci de dispositifs auto-bloquants 12A, 12B, hydrauliques ou mécaniques.

La tuyauterie est entourée d'un calorifuge 13 dans lequel sont noyés les berceaux, le demi-collier et la majeure partie des bras 5A, 5B, et à l'extérieur duquel se trouve seul l'organe de serrage 9.

On voit que si le tarage des ressorts de serrage 10A, 10B est suffisant, la transmission d'efforts se fait rigidement entre la tuyauterie 1 et les dispositifs auto-bloquants 12A, 12B, qui se bloquent en cas de déplacement radiaux rapides, mais se prêtent aux déplacements lents. Si la tuyauterie vient à se dilater ou se contracter radialement par suite d'un changement de température du métal liquide qui y circule, le maintien rigide sans jeu de la tuyauterie est conservé, celle-ci étant préservée d'un bridage excessif par l'élasticité des ressorts.

La possibilité de pivotement autour des axes 3A, 3B laissée aux berceaux 2A, 2B permet de conserver un contact centré entre la tuyauterie et ces berceaux quels que soient les écarts de forme de la tuyauterie et les petites déformations thermiques du demi-collier 7. Par ailleurs, la disposition des quatre berceaux à 90° les uns des autres permet de compenser une tendance à l'ovalisation de la tuyauterie sous l'effort de serrage.

Bien que le dispositif qui vient d'être décrit en référence à la figure du dessin paraisse la forme de réalisation préférable de l'invention, on comprendra que diverses modifications peuvent lui être apportées sans sortir du cadre de cette dernière, certains organes pouvant être remplacés par d'autres qui joueraient un rôle technique analogue. En particulier, le nombre de berceaux peut être modifiés, le nombre minimum étant de deux. Le demi-collier pourrait occuper une fraction du pourtour de la tuyauterie supérieure ou inférieure à 180°. Le nombre de bras articulés pourrait être supérieur à deux, et même être impair. Les ressorts de serrage pourraient être remplacés par des rondelles Belleville.

**Revendications**

1. Dispositif de supportage ou de fixation d'une tuyauterie (1) d'épaisseur faible par rapport à son diamètre et soumise à des variations de température importantes et à des efforts radiaux d'orientation quelconque comprenant
a) un demi-collier rigide (7) disposé autour et espacé du pourtour de la tuyauterie,
b) au moins un bras articulé sur une extrémité du demi-collier,
c) un organe (9) de serrage flexible du bras, refermant élastiquement le bras sur la tuyauterie, indépendamment des dilatations et des efforts radiaux appliqués à la tuyauterie,
et d) des berceaux de support (2A, 2B, 2C, 2D) de profil interne à rayon de courbure voisin de celui de la tuyauterie (1), interposés entre la tuyauterie et le dispositif de serrage formé par le demi-collier rigide (7), les bras articulés (5A, 5B) et l'organe de serrage (9),
caractérisé en ce qu'il comporte deux bras (5A, 5B) articulés sur les extrémités du demi-collier rigide (7), et en ce que les berceaux de support (2A, 2B, 2C, 2D) sont fixés à pivotement sur le demi-collier rigide (7) et les bras articulés (5A, 5B) de manière à compenser une tendance à l'ovalisation de la tuyauterie.

2. Dispositif selon la revendication 1, caractérisé en ce que les berceaux sont revêtus sur leur face de contact avec la tuyauterie d'une couche (8) d'un matériau susceptible d'un écrasement élastique et résistant à la chaleur.

3. Dispositif selon la revendication 2, caractérisé en ce que le matériau susceptible d'un écrasement élastique est un tricot comprimé d'un fil métallique fin.

4. Dispositif selon l'une des revendications 1 à 3, caractérisé en ce que les berceaux, le demi-collier et la majeure partie des bras articulés sont disposés à l'intérieur d'un calorifuge (13) entourant la tuyauterie, et en ce que le dispositif de serrage flexible est disposé à l'extérieur de ce calorifuge.

5. Dispositif selon l'une des revendications 1 à 4, caractérisé en ce qu'il est relié par des étriers (11A, 11B) à des organes de supportage (12A, 12B) auto-bloquants en cas de déplacement rapide, mais autorisant les déplacements lents, ou à des organes de supportage statique.

**Patentansprüche**

1. Vorrichtung zum Tragen und Befestigen einer Rohrleitung (1) mit geringer Wandstärke im Vergleich zu ihrem Durchmesser, welche erheblichen Temperaturschwankungen und radialen Belastungen beliebiger Richtung ausgesetzt ist, wobei die Vorrichtung umfaßt:
a) eine starre Halbschelle (7), das mit Abstand um den Umfang der Rohrleitung angebracht ist,
b) mindestens einen an einem Ende der Halbschelle angelenkten Arm,

c) ein nachgiebiges Spannelement (9) für den Arm, das unabhängig von den Dehnungen und den auf die Rohrleitung wirkenden radialen Belastungen elastisch den Arm um die Rohrleitung schließt, und

d) Tragsättel (2A, 2B, 2C, 2D) mit einem Innenprofil, dessen Krümmungsradius dem der Rohrleitung (12) angenähert ist, wobei die Tragsättel zwischen die Rohrleitung und die durch die starre Halbschelle (7), die angelenkten Arme (5A, 5B) und das Spannelement (9) gebildete Spannvorrichtung eingefügt sind, dadurch gekennzeichnet, daß sie zwei an den Enden der starren Halbschelle (7) angelenkte Arme (5A, 5B) aufweist und daß die Tragsättel (2A, 2B, 2C, 2D) schwenkbar an der starren Halbschelle (7) und den angelenkten Armen (5A, 5B) befestigt sind, derart, daß eine Tendenz zur Ovalisierung der Rohrleitung ausgeglichen wird.

2. Vorrichtung nach Anspruch 1, dadurch gekennzeichnet, daß die Tragsättel an ihrer Berührungsfläche mit der Rohrleitung mit einer Schicht (8) eines Materials überzogen sind, das eine elastische Quetschung verträgt und wärmebeständig ist.

3. Vorrichtung nach Anspruch 2, dadurch gekennzeichnet, daß das eine elastische Quetschung vertragende Material ein komprimiertes Strickgewebe mit einem feinen Metallfaden ist.

4. Vorrichtung nach einem der Ansprüche 1 bis 3, dadurch gekennnzeichnet, daß die Tragsättel, die Halbschelle und der größere Teil der angelenkten Arme im Inneren einer die Rohrleitung umgebenden Wärmeisolation angeordnet sind und daß die nachgiebige Spannvorrichtung außerhalb dieser Wärmeisolation angeordnet ist.

5. Vorrichtung nach einem der Ansprüche 1 bis 4, dadurch gekennzeichnet, daß sie durch Bügel (11A, 11B) an Tragelementen (12A, 12B) befestigt ist, die sich bei rascher Verschiebung selbsttätig blockieren, jedoch langsame Verschiebungen zulassen, oder daß sie an statischen Tragelementen befestigt ist.

# Claims

1. A support or fixing device for a pipework having a wall thickness which is small relative to its diameter, and being subjected to large temperature variations and to radial forces in arbitrary directions, comprising:

a) a rigid half-collar (7) disposed at a distance around the periphery of the pipework,

b) at least one arm hinged to one end of the half-collar,

c) a flexible element (9) clamping the arm by resiliently applying the arm against the pipework, independently of expansions and radial forces applied to the pipework, and

d) support cradles (2A, 2B, 2C, 2D) having an internal profile with a radius of curvature close to that of the pipework (1) interposed between the pipework and the clamping device constituted by the rigid half-collar (7), the hinged arms (5A, 5B) and the clamping element (9), characterized in that it comprises two arms (5A, 5B) hinged to the ends of the rigid half-collar (7), and that the support cradles (2A, 2B, 2C, 2D) are hinged to the rigid half-collar (7), and the hinged arms (5A, 5B) in such a way as to compensate an ovalization of the pipework.

2. A device according to claim 1, characterized in that the cradles are covered on their pipework-contacting faces with a layer (8) of material which is qualified for being crushed elastically and which is heat-resistant.

3. A device according to claim 2, characterized in that the material qualified for being crushed elastically is a compressed knit of fine metal wire.

4. A device according to one of claims 1 to 3, characterized in that the cradles, the half-collar and the major part of the hinged arms are disposed inside a thermal lagging (13) surrounding the pipework, and that the flexible clamping device is disposed outside said thermal lagging.

5. A device according to one of claims 1 to 4, characterized in that it is connected via fastening bows (11A, 11B) to support members (12A, 12B) which are self-locking in the event of fast displacement while authorizing slow displacements, or which are connected to static support members.